# EUROPÄISCHE PATENTSCHRIFT

(11) **EP 2 087 224 B1**
(45) Veröffentlichungstag und Bekanntmachung des Hinweises auf die Patenterteilung: **04.05.2016**
(21) Anmeldenummer: 07803428.7
(22) Anmeldetag: 12.09.2007
(51) Int. Cl.: F02M 31/125

(54) **KRAFTSTOFFHEIZER**
FUEL HEATER
DISPOSITIF DE CHAUFFAGE DE CARBURANT

(30) Priorität: 08.11.2006 DE 102006052634
(43) Veröffentlichungstag der Anmeldung: 12.08.2009
(73) Patentinhaber: Robert Bosch GmbH, 70442 Stuttgart (DE)
(72) Erfinder: REISSNER, Andreas, 70499 Stuttgart (DE); WEIN, Vera, 70176 Stuttgart (DE); SCHMITTINGER, Simon, 71272 Renningen (DE); SCHNEIDER, Jens, 71229 Leonberg (DE); COUFFIGNAL, Jean-Marc, 12390 Auzits (FR)
(86) Internationale Anmeldenummer: PCT/EP2007/059564
(87) Internationale Veröffentlichungsnummer: WO 2008/055725

(56) Entgegenhaltungen:
- EP-A- 0 509 982
- FR-A- 2 860 839
- GB-A- 2 281 101
- US-A- 4 137 872

## Beschreibung

### Stand der Technik

In einigen Ländern wird Alkohol zum Betrieb von Verbrennungskraftmaschinen verwendet. Das Betreiben einer Verbrennungskraftmaschine mit Alkohol ist dort billiger als mit Benzin oder Dieselkraftstoff. Werden z. B. Ottomotoren mit Alkohol betrieben, können diese erst bei einer Temperatur von mehr als 14 °C gestartet werden. Derzeit wird diesem Umstand dadurch Rechnung getragen, dass es im Kraftfahrzeug einen zweiten Tank nebst Leitungen gibt, der normales Benzin enthält. Bei Temperaturen unterhalb von 14 °C wird der Ottomotor mit Benzin gestartet. Nach einigen Minuten, nach denen der Verbrennungsmotor eine bestimmte Temperatur erreicht hat, kann dann auf Alkoholbetrieb umgestellt werden.

Nachteilig ist der Umstand, dass es bei dieser Lösung erforderlich ist, in einem Kraftfahrzeug zwei Tanks vorzuhalten. Diese Tanks benötigen mehr Platz im Fahrzeug, außerdem wird das Fahrzeug dadurch teurer. In den Sommermonaten, wenn die Umgebungstemperaturen stets über 14 °C liegen, wird zum Start des Ottomotors kein Benzin mehr benötigt. Wird zu Beginn der warmen Jahreszeit der Tank nicht geleert, kann das im Benzintank verbliebene Restbenzin in Leitungen und Tank zu dickflüssig werden, da die leichter flüchtigen Bestandteile verdampfen. Wird es hingegen wieder kälter, ist das Starten mit Benzin in diesem Falle aufgrund verstopfter Leitungen und Tanks nicht mehr möglich. Die Leitungen und der Tank zur Bevorratung des Benzins müssen in diesem Falle gereinigt oder gar ausgetauscht werden.

Aus GB 2 281101 A ist eine Vorrichtung zum Beheizen von Kraftstoff mittels einer konventionellen Glühstiftkerze bekannt, wobei die Glühstiftkerze mit einem Heizelement in eine Kammer ragt, in die ein Kraftstoffinjektor Kraftstoff einspritzt.

Bei der aus US 4137872 A bekannten Vorrichtung zum Verdampfen von Kraftstoff ragt in eine Kammer ein konventionelles Heizelement hinein, wobei in diese Kammer Kraftstoff von einem Kraftstoffinjektor eingespritzt wird.

Eine Kaltstarteinrichtung einer mit Alkohol oder mit Alkoholgemischkraftstoffen betriebenen Brennkraftmaschine, bei der der Kraftstoff mittels eines elektrischen Heizelements erhitzt wird, ist aus EP 509 982 A2 bekannt. Das Heizelement, das von einem PTC-Widerstand gebildet wird, ist am Boden einer Verdampfungskammer angeordnet, wobei ein Kraftstoff eines Kraftstoffinjektor auf das Heizelement gelenkt ist und dadurch dort verdampft.

Bei einer aus FR 2 860 839 A1 bekannten Vorrichtung zum Beheizen von Kraftstoff ist in einer Verbrennungsluftzuführung eines Verbrennungsmotors ein elektrisches Widerstandsheizelement angeordnet, dem gegenüber sich eine Injektordüse für den Kraftstoff befindet. Der Kraftstoff wird mittels der Injektordüse auf das Widerstandsheizelement gelenkt.

Aus DE 20 2005 016 047 U1 ist ein Gerät zum Vorwärmen von Biokraftstoffen für Dieselmotoren bekannt. Dieses Gerät weist ein Rohrstück und einen Hohlkörper auf, zwischen denen ein Ringspalt vorhanden ist. Dieser ist einerseits so groß bemessen, um die Passage der benötigten Kraftstoffmenge zu ermöglichen, andererseits jedoch so klein ausgelegt, dass nur ein möglichst geringes Kraftstoffvolumen zwischen Rohrstück und Hohlkörper bevorratet wird.

DE 102 48 802 A1 bezieht sich auf eine Glühstiftkerze mit stark verkürzter Regelwendel. Gemäß dieser Lösung wird eine Glühstiftkerze für eine Brennstoffkraftmaschine vorgeschlagen, die ein Kerzengehäuse umfasst, eine an dem Kerzengehäuse angeschlossene Anschlussvorrichtung für den Glühstrom und ein mit der Anschlussvorrichtung gekoppeltes Glührohr. Dieses ist an seiner dem Kerzengehäuse abgewandten Seite verschlossen. Ferner ist ein in dem Glührohr an einem mit der Anschlussvorrichtung gekoppelten Anschlussbolzen vorgesehenes drahtwendelförmiges Widerstandselement angeordnet, wobei das Widerstandselement aus einer Heizwendel und einer Regelwendel besteht. Die Regelwendel umfasst einen Widerstand zwischen 20 und 100 mΩ. Gemäß dieser Lö sung ist das gesamte, im Glührohr vorgesehene Widerstandselement ein Drittel bis zwei Drittel der Freilänge des Glührohrs einnehmend in dem Bereich des von dem Kerzengehäuse abgewandten Endes des Glührohrs konzentriert.

DE 197 55 822 A1 bezieht sich auf eine Glühstiftkerze. Die Glühstiftkerze weist eine modifizierte Steck-Stemmverbindung auf, so dass sowohl eine radiale als auch eine axiale Zufuhr der Zentrierwindungen einer Glühwendel in eine entsprechende U-förmig ausgebildete Sicke eines Anschlussbolzens möglich ist. Nach der Vorpositionierung der Glühwendel in der Sicke kann eine radiale Verstemmung von Glühwendel und Anschlussbolzen erfolgen oder bei entsprechender Gestaltung der Geometrie der Sicke ganz entfallen. Die Öffnung am Umfang des Anschlussbolzens im Bereich der Sicke ermöglicht sowohl eine radiale als auch eine axiale Zugänglichkeit der innenliegenden Kontur der Sicke. Dadurch kann eine vollständige Reinigung von organischen Schmierstoffen sowie die zuverlässige Prüfung der Reinigung gewährleistet werden. Damit wird die Ausfallrate der durch organische Verschmutzung verursachten Frühausfälle von Glühstiftkerzen herabgesetzt.

### Offenbarung der Erfindung

Erfindungsgemäß wird eine Heizquelle vorgeschlagen, die in das Einspritzsystem integriert ist und der Vorwärmung des Kraftstoffes dient. Die erfindungsgemäß vorgeschlagene Heizquelle, die bevorzugt als in das Einspritzsystem integrierter Kraftstoffheizer ausgebildet ist, umfasst ein geschlossenes, rohrförmig ausgebildetes metallisches Heizrohr, in dem ein Heizelement aus Metall eingebaut ist. Der Aufbau des erfindungsgemäß vorgeschlagenen, in das Einspritzsystem integrierten Kraftstoffheizers entspricht demjenigen der eingangs zum Stand der Technik skizzierten metallischen Glühstiftkerzen.

Als Heizelement des erfindungsgemäß vorgeschlagenen, in das Einspritzsystem integrierten Kraftstoffheizers wird ein spiralförmiger, metallischer Draht verwendet, der einen spezifischen elektrischen Widerstand von 0,07 µΩm bis 0,6 µΩm bei 20 °C aufweist. Der Widerstandsanstieg mit steigender Temperatur sollte möglichst hoch sein. Mit dieser Ausführung ist zwar keine Selbstregulierung möglich, jedoch steigt auch der Widerstand, wenn die Temperatur des Heizelementes ansteigt. Dies wird mittels eines Steuergerätes erkannt, so dass das Heizelement abgeschaltet werden kann. Damit einher geht der Vorteil, dass der Widerstand des Heizelementes auch dann ansteigt, wenn nur ein kleiner Teil des Heizelementes überhitzt. Dies kann sehr leicht durch Gasblasenbildung (Luft, Kraftstoffdampf) im Kraftstoff hervorgerufen werden. Eine Lösung mit einem herkömmlicherweise eingebauten Temperaturfühler würde diese lokale Überhitzung nur dann entdecken, wenn sich die Stelle mit dem Temperatürfühter innerhalb der Gasblase befände. Dieses Risiko wird durch den Einsatz eines Heizelementes vermieden, dessen Widerstandsanstieg mit steigender Temperatur möglichst hoch ausfällt, d.h., dass das Heizelement einen starken Anstieg seines elektrischen Widerstandes bei steigender Temperatur aufweist.

Ein spiralförmiger Heizdraht ist auf einer dem Gehäuse abgewandten Seite mit dem Heizrohr stoffschlüssig verbunden, so z. B. verschweißt. Auf der anderen Seite ist der spiralförmig ausgebildete Heizdraht elektrisch leitend mit einem Anschlussbolzen verbunden, an dessen Ende sich der elektrische Anschluss befindet. Ein keramisches Pulver, bei dem es sich üblicherweise um Magnesiumoxid handelt, dient als elektrische Isolierung gegenüber dem Heizrohr zwischen den Windungen des spiralförmig ausgebildeten Heizdrahtes.

Für die erfindungsgemäß vorgeschlagenen Heizquellen kommen kostengünstige und korrosionsfeste Heizrohre zum Einsatz, die aus nichtrostendem Edelstahl (Inox) oder Cu-Basislegierungen hergestellt werden. Aus Cu-Basistegierungen hergestellte korrosionsfeste Heizrohre weisen den zusätzlichen Vorteil einer sehr guten Wärmeleitfähigkeit auf, daneben können Ni-Cr-Legierungen, z. B. Inconel 2.4851 oder 2.4633 oder dergleichen, als Materialien eingesetzt werden.

Eine Optimierung der Wärmeabfuhr vom Heizrohr der erfindungsgemäß vorgeschlagenen Heizquelle erfolgt durch dessen Ausbildung in dünner Wandstärke, die typischerweise wenige Zehntel bis einige Zehntel mm beträgt oder durch eine Vergrößerung der Strukturierung der Oberfläche durch Riffelung, Rauten oder einer golfballähnlichen Struktur sowie durch Applikation einer Füllung. Im Falle einer Füllung des Heizrohres wird bevorzugt feinteiliges MgO als Isolations- und Wärmeleitpulver eingesetzt.

Da damit zu rechnen ist, dass eine mit Alkohol betriebene Verbrennungskraftmaschine auch mit reinem Benzin und mit einem Alkohol/Benzin-Gemisch betrieben wird, ist dem Flammpunkt von Benzin, der etwa bei 300 °C liegt, Rechnung zu tragen. Bedeutsam ist daher eine schnell ansprechende Überhitzungsschutzeinrichtung, die zuverlässig verhindert, dass die Oberfläche der erfindungsgemäß vorgeschlagenen Heizquelle die Zündtemperatur des Kraftstoffgemisches erreicht und die Maximaltemperatur an der Oberfläche des Heizers maximal 250 °C beträgt.

### Zeichnung

Anhand der Zeichnung wird die Erfindung nachstehend eingehender beschrieben. Der einzigen Figur ist ein Längsschnitt durch den erfindungsgemäß vorgeschlagenen, in das Einspritzsystem integrierten Kraftstoffheizer zu entnehmen.

### Ausführungsvarianten

Der Zeichnung ist ein Ausführungsbeispiel des erfindungsgemäß vorgeschlagenen, bevorzugt in das Einspritzsystem einer Verbrennungskraftmaschine integrierten Kraftstoffheizers zu entnehmen. Der Kraftstoffheizer umfasst einen Rundstecker 1, welcher den positiven Anschluss des in das Einspritzsystem der Verbrennungskraftmaschine integrierten Kraftstoffheizers darstellt. Der Rundstecker 1 ist über eine Isolierscheibe 2 gegen ein Gehäuse 4 des in das Einspritzsystem integrierten Kraftstoffheizers isoliert. Zwischen der Isolierscheibe 2 und dem Gehäuse 4 kann eine Gehäusedichtung 3 eingelassen sein, welche das Gehäuse 4 gegen äußere Umwelteinflüsse wie Wasser, Schmutz oder sonstige Flüssigkeiten abdichtet.

Ein Anschlussbolzen 6 erstreckt sich durch das Gehäuse 4 und ist mit dem Rundstecker 1 elektrisch und mechanisch kontaktiert. Alternativ kann auch ein Schraubkontakt anstelle eines Rundsteckers 1 eingesetzt werden, um den Anschlussbolzen 6 elektrisch zu kontaktieren. Zwischen dem Anschlussbolzen 6 und dem Heizrohr 7 befindet sich eine Heizkörperdichtung 5. Der Anschlussbolzen 6 erstreckt sich des Weiteren durch ein Heizrohr 7, welches in der Bohrung des Gehäuses 4 aufgenommen ist. Das Heizrohr 7 weist eine Wandstärke 11 von nur wenigen Zehntel mm bis einigen Zehntel mm auf, typischerweise mindestens 0,25 mm, so dass die Wärmeleitfähigkeit des Heizrohres 7 maximiert ist. Eine Optimierung der Wärmeabgabe oder der Wärmeleitfähigkeit kann einerseits durch dünne Wandstärken 11 herbeigeführt werden oder andererseits durch eine Vergrößerung der Strukturierung der Oberfläche des Heizrohres 7, so z. B. durch dessen Riffelung, das Aufbringen einer rauten- oder golfballähnlichen Struktur an der Außenumfangsfläche desselben oder auch durch eine Füllung mit feinteiligem MgO, welches als Isolations- und Wärmeleitpulver dient.

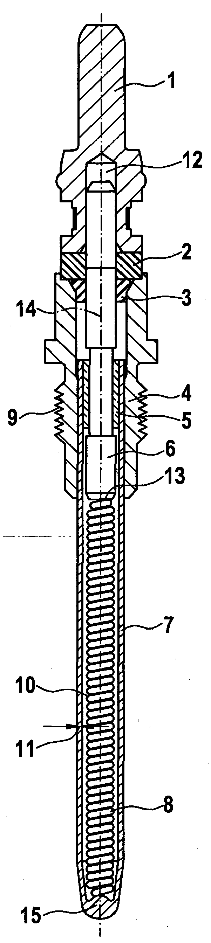

Der vom dünnwandig ausgebildeten Heizrohr 7 umschlossene Anschlussbolzen 6 kontaktiert mit einer Stirnseite 13 das spiralförmig ausgebildete Heizelement 8, welches sich von der Stirnseite 13 des Anschlussbolzens 6 zur Spitze 15 des in das Einspritzsystem integrierten Kraftstoffheizers gemäß Figur 1 erstreckt. Der sich aufgrund des Untermaßes hinsichtlich des Durchmessers des Anschlussbolzens 6 im Vergleich zum Innendurchmesser des dünnwandig ausgebildeten Heizrohres 7 ergebende Hohlraum 10 wird mit einem keramischen Pulver, so z. B. Magnesiumoxid, befüllt, welches als Isolierung zwischen dem Anschlussbolzen 6 und dem Heizrohr 7 dient.

Das Heizrohr 7 des erfindungsgemäß vorgeschlagenen, bevorzugt in das Einspritzsystem integrierten Kraftstoffheizers wird aus einem kostengünstigen und korrosionsfesten Material wie z. B. nichtrostender Edelstahl (Inox) oder aus Cu-Basislegierungen hergestellt. Cu-Basislegierungen zur Herstellung des Heizrohres 7 haben zusätzlich den Vorteil einer sehr guten Wärmeleitfähigkeit. Eine Optimierung der Wärmeabfuhr erfolgt durch die Ausbildung des Heizrohres 7 in sehr dünner Wandstärke 11, die typischerweise mindestens 0,25 mm beträgt, oder durch eine Vergrößerung der die Wärme ableitenden Oberfläche durch deren Strukturierung, wie z. B. durch Riffelung, Rautenbildung oder eine einer Golfballoberfläche ähnliche Struktur. Des Weiteren kann die Wärmeabfuhr aus dem erfindungsgemäß vorgeschlagen dünnwandig ausgebildeten Heizrohr 7 durch eine Füllung mit feinteiligem Magnesiumoxid als Isolations- und Wärmeleitpulver verbessert werden. Die Optimierung der Wärmeabfuhr aus dem erfindungsgemäß vorgeschlagenen, bevorzugt in das Einspritzsystem der Verbrennungskraftmaschine integrierten Kraftstoffheizer ist deshalb wichtig, da der Kraftstoffheizer eine-Wärmeleistung von 150 W bis 250 W produziert.

Um dem Umstand Rechnung zu tragen, dass eine mit Alkohol betriebene Verbrennungskraftmaschine auch mit reinem Benzin betrieben wird, welches einen Flammpunkt von 300 °C aufweist, ist der erfindungsgemäß vorgeschlagene, bevorzugt in das Einspritzsystem integrierte Kraftstoffheizer mit einer Überhitzungsschutzeinrichtung versehen. Durch den Überhitzungsschutz ist sichergestellt, dass die Oberfläche des erfindungsgemäß vorgeschlagenen Kraftstoffheizers, insbesondere die Oberfläche des Heizrohres 7, nicht auf die Zündtemperatur des Kraftstoffgemisches ansteigt und sichergestellt ist, dass die Maximaltemperatur der Außenumfangsfläche des Heizrohres 7 etwa 250 °C nicht übersteigt. Der Überhitzungsschutz wird dadurch gewährleistet, dass das bevorzugt spiralförmig ausgebildete, wendelförmig ausgebildete Heizelement 8 als metallischer Draht ausgebildet wird, der einen spezifischen elektrischen Widerstand von 0,07 µΩm bis 0,6 µΩm bei 20 °C aufweist. Das metallische Material, aus welchem das bevorzugt spiralförmig ausgebildete Heizelement 8 gefertigt wird, weist bevorzugt einen hohen Widerstandsanstieg bei steigender Temperatur auf. Mit dieser Ausführung ist zwar keine Selbstregulierung möglich, jedoch wird mit der Überhitzungsschutzeinrichtung gewährleistet, dass bei, sich zunehmend erwärmenden Kraftstoffheizer auch der Widerstand des Heizelementes 8 ansteigt und dass der Widerstandwert mit einem Schwellwert verglichen wird. Dies wird durch ein Steuergerät realisiert, das bei Erreichen des Schwellwertes die Bestromung des Heizelements 8 über den positiven Anschluss des Anschlussbolzens 6 abschaltet. Zur Erkennung einer Überhitzung kann auch die erste und/oder zweite Ableitung des Stromes nach der Zeit verwendet werden. Nach einem Einschwingvorgang stellt sich im Normalbetrieb ein Gleichgewichtszustand des gemessenen Stromes ein. Weicht der vom Steuergerät erfasste und differenzierte Strom nach dem Einschwingvorgang von dem differenzierten Wert ab, d.h. die Ableitung nach der Zeit ist ungleich null, wird die Bestromung des Heizelements 8 abgeschaltet. Dadurch kann eine Überhitzung ohne den Einfluss von Fertigungstoleranzen detektiert werden.

Der Vorteil dieser Varianten liegt darin, dass auch dann eine Widerstandserhöhung des Kraftstoffheizers erkannt werden kann, wenn nur ein kleiner Teil des Kraftstoffheizers überhitzt. Dies kann sehr leicht durch Gasblasen im Kraftstoff, die durch Luftblasen oder Kraftstoffdampf gebildet werden,- hervorgerufen werden. Würde ein Temperaturfühler in den Kraftstoffheizer integriert, könnte dieser eine ansteigende Temperatur nur dann entdecken, wenn sich die Einbaustelle des Temperaturfühlers in einer Gasblase befände. Durch die erfindungsgemäß vorgeschlagene Ausführung des Kraftstoffheizers ist sichergestellt, dass auch eine Überhitzung lediglich eines kleinen Teiles des Kraftstoffheizers durch Erkennung eines ansteigenden Widerstandes detektiert werden kann und mit einer Abschaltung auf diese reagiert wird.

Wie aus der Zeichnung hervorgeht, erstreckt sich der Anschlussbolzen 6 im Gehäuse 4 des Kraftstoffheizers vorzugsweise bis zum unteren Ende des Gehäuses 4. Der Anschlussbolzen 6 kann auch kürzer oder länger ausgebildet sein, abgestimmt auf die Länge des bevorzugt wendelförmig ausgebildeten Heizelementes 8. In das Gehäuse 4 ist zudem das Heizrohr 7 eingelassen und unter Zwischenschaltung einer Heizkörperdichtung 5, dem erwähnten Anschlussbolzen 6 im Gehäuseinneren des Gehäuses 4 fixiert. Die Stirnseite 13 des Anschlussbolzens 6 kontaktiert das wendelförmig ausgebildete Heizelement 8, welches sich durch den größten Teil des Heizrohres 7, welches in dünner Wandstärke 11 ausgeführt ist, von der Stirnseite 13 bis zur Spitze 15 des Kraftstoffheizers erstreckt. Ein Hohlraum 10 innerhalb des Heizrohres 7 zwischen dessen Innenseite und dem wendelförmig ausgebildeten Heizelement 8 ist bevorzugt mit einem Isolationsmaterial wie z. B. Magnesiumoxid ausgefüllt. Die Funktion des im Hohlraum 10 aufgenommenen Isolationsmaterials, bei dem es sich bevorzugt um Magnesiumoxid handelt, liegt einerseits in einer Isolierung der einzelnen Windungen des bevorzugt wendelförmig ausgebildeten Heizelementes 8 gegeneinander sowie in einer Isolierung des wendelförmig ausgebildeten Heizelementes 8 gegen die Rohrwand des Heizrohres 7. Des Weiteren verbessert das im Hohlraum 10 aufgenommene Isolationsmaterial den Wärmetransport vom wendelförmig ausgebildeten Heizelement 8 zum Heizrohr 7. Schließlich dient das im Hohlraum 10 bevorratete Isolationsmaterial einer mechanischen Fixierung der sich im Wesentlichen über die axiale Länge des Heizrohres 7 erstreckenden, bevorzugt wendelförmig ausgebildeten Heizelementes 8. Durch die aus der Zeichnung hervorgehende Anordnung eines einstückig ausgebildeten, wendelförmig konfigurierten Heizelementes 8 innerhalb des Heizrohres 7 wird die Abgabe einer hohen Heizleistung durch die Wand des Heizrohres 7 ermöglicht. Da die Außenseite des Heizrohres 7 stets von Kraftstoff umspült ist, d. h. in diesen eingetaucht ist, wird die entstehende Wärme auch vom umgebenden Fluid abgeführt. Während bei den aus dem Stand der Technik bekannten Glühstiftkerzen zunächst deren Spitze 15 erwärmt wird, erfolgt durch den erfindungsgemäß vorgeschlagenen Kraftstoffheizer eine gleichmäßige Erwärmung der gesamten Außenumfangsfläche des Heizrohres 7 unterhalb des Gehäuses 4. Damit wird eine möglichst große Wärmeübertragungsfläche geschaffen, so dass der im Einspritzsystem bevorratete Kraftstoff, wie z. B. Alkohol, schnell erwärmt werden kann. Der erfindungsgemäß vorgeschlagene Kraftstoffheizer benötigt keine Kühlung, da das diesen umgebende Medium, d. h. der Kraftstoff, die vom Kraftstoffheizer erzeugte Wärme aufnimmt und aus dem Kraftstoffheizer abführt.

Bei dem erfindungsgemäß vorgeschlagenen Kraftstoffheizer kommt insbesondere ein Heizelement 8 zum Einsatz, welches als ein spiralförmig ausgebildeter metallischer Draht ausgeführt ist, der einen spezifischen elektrischen Widerstand von 0,07 µΩm bis 0,6 µΩm bei einer Temperatur von 20 °C aufweist. Es wird bevorzugt ein metallisches Material verwendet, welches den PTC-Effekt aufweist, d. h. einen ausgeprägten Widerstandsanstieg mit steigender Temperatur aufweist. Wenn der erfindungsgemäß vorgeschlagene Kraftstoffheizer wärmer wird, steigt auch dessen Widerstand, was wiederum durch ein Steuergerät erkannt werden kann, welches in diesem Falle den erfindungsgemäß vorgeschlagenen Kraftstoffheizer abschaltet. Der Vorteil des Einsatzes eines Materials, welches einen sehr starken Widerstandsanstieg bei steigender Temperatur aufweist, liegt darin, dass auch erkannt werden kann, wenn nur ein kleiner Teil des Heizers überhitzt, da in diesem Falle der Widerstand des erfindungsgemäß vorgeschlagenen Kraftstoffheizers ebenfalls ansteigt. Das Überhitzen lediglich eines kleinen Teiles des erfindungsgemäß vorgeschlagenen Kraftstoffheizers kann dadurch verursacht werden, dass am Außenumfang des Heizrohres 7 eine Gasblase liegt, die in diesem Falle zu einer lokalen Temperaturerhöhung in der Mantelfläche des das Heizelement 8 umschließenden Heizrohres 7 führen würde.

Durch die Auswahl des metallischen Materials, aus dem das wendelförmige, spiralförmig ausgebildete Heizelement 8 bevorzugt gefertigt ist, und welches einen starken PTC-Effekt aufweist, kann eine derartige, wenn auch nur lokal am Kraftstoffheizerumfang auftretende Temperaturerhöhung sofort registriert werden und durch das Steuergerät des erfindungsgemäß vorgeschlagenen Kraftstoffheizers eine Abschaltung des Kraftstoffheizers vorgenommen werden.

## Patentansprüche

1. Vorrichtung zum Beheizen von Kraftstoff, insbesondere von Alkohol, zum Betrieb von Verbrennungskraftmaschinen, die mit Alkohol oder einem Alkohol-Benzin-Gemisch betrieben werden, wobei die Vorrichtung zum Beheizen von Kraftstoff in ein Einspritzsystem der mit Alkohol oder einem Alkohol-Benzin-Gemisch betreibbaren Verbrennungskraftmaschine integriert ist, wobei diese ein Gehäuse (4) und ein dünnwandig ausgebildetes Heizrohr (7) aufweist, welches ein Heizelement (8) aus einem Material umschließt, das einen Anstieg seines elektrischen Widerstandes bei steigender Temperatur aufweist, **dadurch gekennzeichnet, dass** eine Überhitzungsschutzeinrichtung vorgesehen ist, indem das Heizelement (8) als ein spiralförmig und wendelförmig ausgebildeter metallischer Draht ausgeführt ist, der einen spezifischen elektrischen Widerstand von 0,07 µΩm bis 0,6 µΩm bei 20 °C aufweist.

2. Vorrichtung gemäß Anspruch 1, **dadurch gekennzeichnet, dass** die wärmeabgebende Oberfläche des rohrförmig ausgebildeten Heizkörpers (7) durch eine Riffelung oder eine Rautenstruktur vergrößert ist.

3. Vorrichtung gemäß Anspruch 1, **dadurch gekennzeichnet, dass** ein zwischen dem rohrförmig ausgebildeten Heizkörper (7), dem elektrisch kontaktierten Anschlussbolzen (6) und dem spiralförmig ausgebildeten Heizelement (8) verbleibender Hohlraum (10) mit einem Isolationsmaterial befüllt ist und dass das Isolationsmaterial ein keramisches Material, bevorzugt Magnesiumoxid, ist.

4. Vorrichtung gemäß Anspruch 1, **dadurch gekennzeichnet, dass** das Heizelement (8) sich im Wesentlichen über die gesamte Länge des Heizrohres (7) von der Unterseite des Gehäuses (4) bis zur Spitze (15) des Heizrohres (7) erstreckt, so dass das Heizelement (8) eine möglichst große Fläche des Heizrohres (7) gleichmäßig erwärmt.

5. Vorrichtung gemäß Anspruch 1, **dadurch gekennzeichnet, dass** das Heizelement (8) wendelförmig als ein Bauteil ausgeführt ist und sich von einer Stirnseite (13) eines Anschlussbolzens (6) durchgängig bis zur Spitze (15) des Heizrohres (7) erstreckt.

6. Vorrichtung gemäß Anspruch 1, **dadurch gekennzeichnet, dass** die Überhitzungsschutzeinrichtung Mittel aufweist, die den Anstieg des elektrischen Widerstandes des Heizelements (8) bei steigender Temperatur erfassen und die bei Erreichen eines Schwellwertes die Bestromung des Heizelements (8) abschalten.

7. Vorrichtung gemäß Anspruch 1, **dadurch gekennzeichnet, dass** die Überhitzungsschutzeinrichtung Mittel aufweist, die den Strom durch des Heizelement (8) erfassen und differenzieren und die bei einer Abweichung der Ableitung nach der Zeit von dem Wert Null die Bestromung des Heizelements (8) abschalten.

8. Vorrichtung gemäß Anspruch 1, **dadurch gekennzeichnet, dass** diese vorzugweise in ein Einspritzsystem der Verbrennungskraftmaschine integriert ist.

9. Verwendung einer metallischen Glühstiftkerze als Vorrichtung zum Beheizen von Kraftstoff nach mindestens einem der vorhergehenden Ansprüche

## Claims

1. Device for heating fuel, in particular alcohol, for the operation of internal combustion engines which are operated with alcohol or with an alcohol-gasoline mixture, wherein the device for heating fuel is integrated into an injection system of the internal combustion engine operable with alcohol or with an alcohol-gasoline mixture, wherein said device has a housing (4) and has a heating tube (7) which is of thin-walled form and which surrounds a heating element (8) composed of a material which exhibits an increase in electrical resistance with increasing temperature, **characterized in that** an overheating prevention device is provided by virtue of the heating element (8) being formed as a metallic wire of spiral-shaped and coiled form which has a specific electrical resistance of 0.07 µΩm to 0.6 µΩm at 20°C.

2. Device according to Claim 1, **characterized in that** the heat-emitting surface of the heating body (7,) of tubular form is enlarged by way of a fluting or a rhombic structure.

3. Device according to Claim 1, **characterized in that** a cavity (10) which remains between the heating body (7) of tubular form, the electrically contacted terminal pin (6) and the heating element (8) of spiral-shaped form is filled with an insulation material, and **in that** the insulation material is a ceramic material, preferably magnesium oxide.

4. Device according to Claim 1, **characterized in that** the heating element (8) extends substantially over the entire length of the heating tube (7) from the underside of the housing (4) to the tip (15) of the heating tube (7), such that the heating element (8) uniformly heats as large an area as possible of the heating tube (7).

5. Device according to Claim 1, **characterized in that** the heating element (8) is of coiled form as one component and extends in continuous fashion from a face side (13) of a terminal pin (6) to the tip (15) of the heating tube (7).

6. Device according to Claim 1, **characterized in that** the overheating prevention device has means which detect the increase in electrical resistance of the heating element (8) with increasing temperature and deactivate the current supplied to the heating element (8) if a threshold value is reached.

7. Device according to Claim 1, **characterized in that** the overheating prevention device has means which detect and differentiate the current through the heating element (8) and which deactivate the current supply to the heating element (8) if the derivative with respect to time deviates from the value zero.

8. Device according to Claim 1, **characterized in that** said device is preferably integrated into an injection system of the internal combustion engine.

9. Use of a metallic sheathed-element glow plug as a device for heating fuel according to at least one of the preceding claims.

## Revendications

1. Dispositif de chauffage de carburant, en particulier d'alcool, pour le fonctionnement de moteurs à combustion interne qui fonctionnent avec de l'alcool ou un mélange d'alcool et d'essence, le dispositif de chauffage de carburant étant intégré dans un système d'injection du moteur à combustion interne qui fonctionne avec de l'alcool ou un mélange d'alcool et d'essence, le dispositif présentant un boîtier (4) et un tube chauffant (7) réalisé à parois minces qui entoure un élément chauffant (8) en un matériau dont la résistance électrique augmente avec l'augmentation de la température, **caractérisé en ce qu'**un dispositif de protection contre la surchauffe est prévu, par le fait que l'élément chauffant (8) est réalisé sous forme de fil métallique réalisé en spirale ou en hélice, qui présente une résistance électrique spécifique de 0,07 µΩm à 0,6 µΩm à 20°C.

2. Dispositif selon la revendication 1, **caractérisé en ce que** la surface diffusant de la chaleur du corps chauffant (7) réalisé sous forme de tube est augmentée par un rainurage ou une structure rhombiforme.

3. Dispositif selon la revendication 1, **caractérisé en ce qu'**une cavité (10) subsistant entre le corps chauffant (7) réalisé sous forme tubulaire, le boulon de raccordement à contact électrique (6) et l'élément chauffant (8) réalisé en forme de spirale est rempli d'un matériau isolant et **en ce que** le matériau isolant est un matériau céramique, de préférence de l'oxyde de magnésium.

4. Dispositif selon la revendication 1, **caractérisé en ce que** l'élément chauffant (8) s'étend essentiellement sur toute la longueur du tube chauffant (7) depuis le côté inférieur du boîtier (4) jusqu'à la pointe (15) du tube chauffant (7), de telle sorte que l'élément chauffant (8) chauffe uniformément une surface aussi grande que possible du tube chauffant (7).

5. Dispositif selon la revendication 1, **caractérisé en ce que** l'élément chauffant (8) est réalisé sous forme d'hélice sous forme de composant et s'étend depuis un côté frontal (13) d'un boulon de raccordement (6) de manière continue jusqu'à la pointe (15) du tube chauffant (7).

6. Dispositif selon la revendication 1, **caractérisé en ce que** le dispositif de protection contre la surchauffe présente des moyens qui détectent l'augmentation de la résistance électrique de l'élément chauffant (8) lorsque la température augmente et qui coupent l'alimentation électrique de l'élément chauffant (8) lorsqu'une valeur de seuil est atteinte.

7. Dispositif selon la revendication 1, **caractérisé en ce que** le dispositif de protection contre la surchauffe présente des moyens qui détectent et différentient le passage d'un courant à travers l'élément chauffant (8) et qui, en cas d'écart de la dérivée dans le temps de la valeur zéro, coupent l'alimentation électrique de l'élément chauffant (8).

8. Dispositif selon la revendication 1, **caractérisé en ce que** celui-ci est de préférence intégré dans un système d'injection du moteur à combustion interne.

9. Utilisation d'une bougie de préchauffage métallique en tant que dispositif pour chauffer du carburant selon au moins l'une quelconque des revendications précédentes.
